# EUROPÄISCHE PATENTANMELDUNG

(11) **EP 2 022 456 A2**
(43) Veröffentlichungstag der Anmeldung: **11.02.2009**
(21) Anmeldenummer: 08104592.4
(22) Anmeldetag: 01.07.2008
(51) Int. Cl.: A61H 3/06, G01C 21/26

(54) **Tragbares Navigationsgerät**

(30) Priorität: 09.08.2007 DE 102007037520
(71) Anmelder: ROBERT BOSCH GMBH, 70442 Stuttgart (DE)
(72) Erfinder: Vogel, Andreas, 31139, Hildesheim (DE)

(57) **Zusammenfassung**

Die Erfindung betrifft ein tragbares Navigationsgerät mit einer Richtungsbestimmungseinrichtung (101) zum Bestimmen einer Bewegungsrichtung des tragbaren Navigationsgerätes, einer Kartografieeinrichtung (103) zum Verknüpfen der Bewegungsrichtung mit kartografischer Information, wobei die Kartografieeinrichtung (103) ferner ausgebildet ist, ein Hindernis in der Bewegungsrichtung zu erkennen und einer Hinweiseinrichtung (105) zum Ausgeben eines Hinweissignals, falls die Kartografieeinrichtung (103) ein Hindernis in der Bewegungsrichtung erkannt hat.

## Beschreibung

### Technisches Gebiet

Die vorliegende Erfindung betrifft tragbare Navigationsgeräte sowie Verfahren zur Unterstützung sehbehinderter Personen.

### Stand der Technik

Zur Navigation durch eine Stadt können tragbare Navigationsgeräte eingesetzt werden, die entweder eine gegenwärtige Position eines Fußgängers innerhalb einer kartografischen Umgebung oder eine Zielroute grafisch darstellen. Dabei wird beispielsweise ein Weg angezeigt, dem ein Fußgänger folgen soll, um das Ziel zu erreichen. Weitere bekannte Navigationsgeräte geben an Entscheidungspunkten, beispielsweise vor Kreuzungen, Abbiegeempfehlungen aus (s. z. B. DE 199 26 367 A1)

Derartige Navigationsgeräte können sehbehinderten Personen das Finden des Zieles erleichtern. Sie bieten jedoch keine Hilfestellung für die betreffende Person an, sich im näheren Umfeld zu bewegen bzw. zu orientieren und diese insbesondere vor einer Kollision mit anderen Verkehrsteilnehmern oder feststehenden Objekten zu schützen.

Es ist die Aufgabe der Erfindung, ein tragbares Navigationsgerät zu schaffen, das blindengerecht ist, und insbesondere einer sehbehinderten Person zu ermöglichen sich sicherer in öffentlichen Bereichen zu bewegen.

Diese Aufgabe wird durch die Merkmale der unabhängigen Ansprüche gelöst. Vorteilhafte Weiterbildungsformen sind in den abhängigen Ansprüchen angegeben.

### Offenbarung der Erfindung

Die Erfindung schafft ein tragbares Navigationsgerät mit einer Richtungsbestimmungseinrichtung, die eine Bewegungsrichtung des tragbaren Navigationsgerätes, also die Bewegungsrichtung eines Benutzers, der z.B. das Navigationsgerät trägt, bestimmt. Das Navigationsgerät umfasst ferner eine Kartografieeinrichtung, die die Bewegungsrichtung mit kartografischer Information, beispielsweise mit einer Umgebungskarte, in der Straßen, Gebäude und sonstige Hindernisse verzeichnet sind, verknüpft, um eine Position auf einer virtuellen Karte zu bestimmen. Die Kartografieeinrichtung ist bevorzugt ausgebildet, ein bevorstehendes Hindernis in der Bewegungsrichtung, beispielsweise eine Querstraße, zu erkennen. Das Navigationsgerät umfasst ferner eine Hinweiseinrichtung zum Ausgeben eines Hinweissignals, falls die Kartografieeinrichtung ein Hindernis in der Bewegungsrichtung erkannt hat.

Das erfindungsgemäße tragbare Navigationsgerät richtet sich insbesondere an einen sehbehinderten Benutzer. Das tragbare Navigationsgerät bestimmt dann die Position und/oder die Laufrichtung des Anwenders und warnt beispielsweise akustisch und/oder unter Verwendung eines Vibrationsalarms rechtzeitig vor Hindernissen, beispielsweise vor einer Straße oder vor einem Gebäude, die sich in Laufrichtung befinden.

Dadurch wird die Sicherheit insbesondere für sehbehinderte Anwender erhöht, die in unbekannten Gebieten rechtzeitig auch beispielsweise auf wenig befahrene Straßen hingewiesen werden, insbesondere dann, wenn beispielsweise eine Querstraße nicht sofort durch Verkehrsgeräusche erkannt werden kann. Darüber hinaus kann auch der Straßenname der als Hindernis erkannten Querstraße als Orientierungshilfe akustisch ausgegeben werden.

Bevorzugt gibt die Hinweiseinrichtung als Hinweissignal ein akustisches Warnsignal und/oder ein Vibrationswarnsignal aus. Gemäß einer Ausführungsform benötigt das tragbare Navigationsgerät daher kein Display.

Gemäß einer weiteren Ausführungsform kann jedoch eine Sprach-Ausgabeeinrichtung oder Braille-Ausgabeeinrichtung vorgesehen werden, das beispielsweise einen Straßennamen einer die Bewegungsrichtung kreuzenden und als Hindernis erkannten Straße oder einen Hinweis auf ein in Bewegungsrichtung befindliches Objekt ausgibt. Dadurch wird erreicht, dass das tragbare Navigationsgerät im Wesentlichen Funktionalitäten aufweist, die von sehbehinderten Personen genutzt werden können.

Gemäß einer Ausführungsform ist die Kartografieeinrichtung ausgebildet, die Bewegungsrichtung und beispielsweise eine Positionsinformation über eine Position des tragbaren Navigationsgerätes mit der kartografischen Information zu verknüpfen. Da die Position des tragbaren Navigationsgerätes im Allgemeinen mit der Position des Benutzers übereinstimmt, bestimmt somit die Kartografieeinrichtung eine Position der das Navigationsgerät tragenden Person. Durch die Verknüpfung der Positionsinformation mit der kartografischen Information wird die Position, beispielsweise die Anfangsposition des Navigationsgeräts innerhalb einer kartografischen Umgebung umfassend beispielsweise Straßen, Gebäude und sonstige Hindernisse, bestimmt. Somit können in der Bewegungsrichtung liegende Hindernisse durch die Verknüpfung mit der Bewegungsinformation die aktuelle Position erkannt werden.

Gemäß einer Ausführungsform kann beispielsweise eine anfängliche Position des tragbaren Navigationsgerätes und/oder eine Straßenseiteninformation in das tragbare Navigationsgerät, beispielsweise in die Richtungsbestimmungseinrichtung, eingegeben werden. Die Eingabe kann beispielsweise akustisch erfolgen, wobei das tragbare Navigationsgerät ferner ein Spracherkennungsmodul aufweisen kann, das die akustisch übermittelte Information detektieren kann. Dadurch kann der Anwender einfach seine gegenwärtige Position dem tragbaren Navigationsgerät mitteilen, das hiervon ausgehend beispielsweise die Bewegungsrichtung und/oder die Bewegungsgeschwindigkeit bestimmen kann. Die Eingabe kann jedoch auch manuell erfolgen. Hierzu umfasst das Navigationsgerät beispielsweise eine blindengerechte Tastatur, die Zahlen und Buchstaben haptisch erkennen lässt.

Um die Positionsbestimmung, die durch die Kartografieeinrichtung vorgenommen wird zu unterstützen, kann der sehbehinderte Benutzer dem tragbaren Navigationsgerät beispielsweise durch Eingabe in die Richtungsbestimmungseinrichtung mitteilen, auf welcher Straßenseite er sich befindet. Dies ist insbesondere dann von Vorteil, falls die Ortungsgenauigkeit nicht ausreicht, um die Straßenseite automatisch zu identifizieren.

Gemäß einer Ausführungsform umfasst das tragbare Navigationsgerät beispielsweise einen Kompass und/oder einen Beschleunigungssensor und/oder einen Drehratensensor, der eine Drehung beispielsweise unter Ausnutzung der Corioliskraft bestimmt. Bei dem Beschleunigungssensor kann es sich um einen gewöhnlichen Beschleunigungssensor handeln, der die Beschleunigung beispielsweise unter Verwendung einer Feder erfasst. Dadurch ist das Navigationsgerät in der Lage, die Bewegungsrichtung und bei Verknüpfung der Daten des Kompasses, des Beschleunigungssensors und/oder des Drehratensensors die Position des Navigationsgerätes zu bestimmen. Der Kompass und/oder der Beschleunigungssensor und/oder der Drehratensensor können beispielsweise in der Richtungsbestimmungseinrichtung angeordnet sein.

Gemäß einer Ausführungsform ist das tragbare Navigationsgerät ausgebildet, die Bewegungsrichtung und/oder die Position, beispielsweise die anfängliche Position, des tragbaren Navigationsgerätes durch den Empfang und die Verarbeitung von zumindest einem Satellitenpositionierungssignal, z.B. einem GPS-Signal (GPS: global positioning system) oder einem Galileo-Signal zu bestimmen. Beispielsweise ist hierzu die Richtungsbestimmungseinrichtung vorgesehen. Dadurch können die Positions- und Bewegungsinformationen einfach und genau bestimmt werden.

Gemäß einer Ausführungsform ist die Kartografieeinrichtung vorgesehen, beispielsweise eine Querstraße oder ein in der Bewegungsrichtung befindliches Objekt als Hindernis zu erkennen. Beispielsweise erkennt die Kartografieeinrichtung das Hindernis als solches, falls ein Abstand zwischen dem tragbaren Navigationsgerät und dem Hindernis, z.B. der Querstraße oder dem in der Bewegungsrichtung befindlichen Objekt gleich oder geringer als ein vorbestimmter Entfernungsschwellwert ist. Der Entfernungsschwellwert ist beispielsweise fest vorgegeben oder in das tragbare Navigationsgerät wie vorstehend beschrieben akustisch oder manuell eingebbar.

Gemäß einer Ausführungsform ist der Entfernungsschwellwert größer als eine in Metern ausgedrückte Ortungsungenauigkeit des Navigationsgerätes, die z.B. 10m oder 20m betragen kann. Dadurch wird verhindert, dass der Anwender aufgrund der Ortungsungenauigkeit nicht rechtzeitig vor einem Hindernis gewarnt wird. Gemäß einer Ausführungsform ist das tragbare Navigationsgerät ausgebildet, eine alternative Bewegungsroute zur Umgehung des Hindernisses zu bestimmen und/oder beispielsweise akustisch anzuzeigen. Die alternative Bewegungsroute wird beispielsweise unter Umgehung des Hindernisses und unter Zuhilfenahme der kartografischen Information derart bestimmt, dass die Bewegungsrichtung beibehalten wird.

Gemäß einem weiteren Aspekt schafft die Erfindung ein Navigationsverfahren unter Verwendung eines tragbaren Navigationsgerätes, wobei eine kartografische Information bereitgestellt wird, eine Bewegungsrichtung des tragbaren Navigationsgerätes bestimmt wird, die Bewegungsrichtung mit der kartografischen Information verknüpft wird und, bei Vorliegen eines Hindernisses in der Bewegungsrichtung, das Hindernis als solches erkannt und ein Hinweissignal ausgegeben wird.

Weitere Schritte des erfindungsgemäßen Navigationsverfahrens ergeben sich direkt aus der Funktionalität des tragbaren Navigationsgerätes.

Die Erfindung schafft ferner ein Computerprogramm zum Ausführen des erfindungsgemäßen Navigationsverfahrens, wenn das Computerprogramm auf einem Rechner ausgeführt wird.

Gemäß einem weiteren Aspekt schafft die Erfindung eine programmtechnisch eingerichtete Vorrichtung, die ausgebildet ist, das Computerprogramm zum Betreiben des Navigationsverfahrens auszuführen.

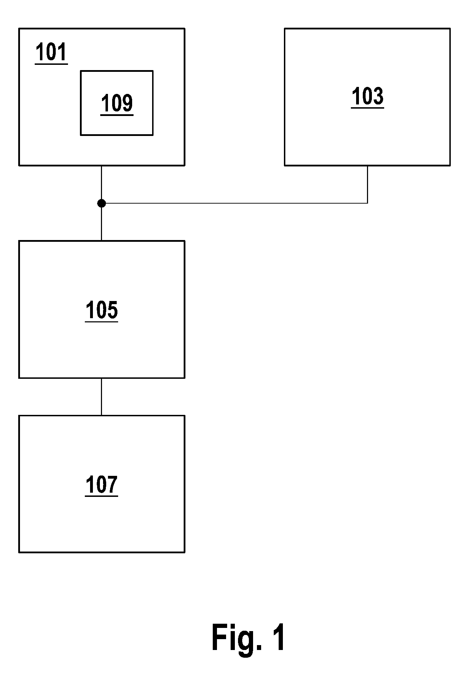

Weitere Ausführungsbeispiele werden anhand von Fig. 1, die ein Blockdiagramm eines tragbaren Navigationsgerätes zeigt, erläutert.

### Beschreibung der Ausführungsformen

Das in Fig. 1 dargestellte Navigationsgerät umfasst eine Richtungsbestimmungseinrichtung 101, deren Ausgang mit einem Eingang einer Kartografieeinrichtung 103 verbunden ist. Die Kartografieeinrichtung 103 hat einen Ausgang, der mit einem Eingang einer Hinweiseinrichtung 105 verbunden ist.

Die Richtungsbestimmungseinrichtung 101 bestimmt die Bewegungsrichtung des tragbaren Navigationsgerätes und gibt ein Bewegungssignal aus, das die Bewegungsrichtung anzeigt. Die Bewegungsrichtung wird mit Hilfe eines Detektors 109 erkannt, der z.B. einen Kompass und/oder einen Beschleunigungssensor und/oder einen Drehratensensor, der eine Drehung beispielsweise unter Ausnutzung der Corioliskraft bestimmt, aufweisen kann. Bei dem Beschleunigungssensor kann es sich um einen gewöhnlichen Beschleunigungssensor handeln, der die Beschleunigung beispielsweise unter Verwendung einer Feder erfasst. Dadurch ist das Navigationsgerät in der Lage, die Bewegungsrichtung und bei Verknüpfung der Daten des Kompasses, des Beschleunigungssensors und/oder des Drehratensensors die Position des Navigationsgerätes zu bestimmen.

Alternativ oder zusätzlich Gemäß kann die Bewegungsrichtung und/oder die Position des tragbaren Navigationsgerätes durch den Empfang und die Verarbeitung von zumindest einem Satellitenpositionierungssignal, z.B. einem GPS-Signal (GPS: global positioning system) oder einem Galileo-Signal bestimmt werden.

Das Bewegungssignal wird von der Kartografieeinrichtung 103 empfangen und die Information über die Bewegungsrichtung wird mit der kartografischen Information verknüpft, so dass die Kartografieeinrichtung 103 die Position auf einer virtuellen Karte (Landkarte, Straßenkarte usw.) ermitteln kann.

Ausgehend von der Position auf der virtuellen Karte und der momentanen Bewegungsrichtung des Benutzers, der das Navigationsgerät trägt, wird in der Kartografieeinrichtung (103) überprüft, ob sich in der momentanen Bewegungsrichtung ein Hindernis, wie z.B. eine Querstrasse, eine Mauer, ein feststehendes Objekt, eine Gehwegunterbrechung befindet. Erkennt die Kartografieeinrichtung 103 ein Hindernis, so gibt sie z.B. ein Steuersignal aus, das das erkannte Hindernis anzeigt. Die Hinweiseinrichtung 105 empfängt das Steuersignal und gibt ein Hinweissignal, das das Hindernis anzeigt, an den Benutzer über eine geeignete Ausgabeeinrichtung (107) z.B. als akustisches Warnsignal oder ein Vibrationswarnsignal aus.

Das Navigationsgerät kann sowohl in Hardware unter Verwendung von integrierten Schaltkreisen als auch in Software implementiert werden.

## Patentansprüche

1. Tragbares Navigationsgerät, mit:
einer Richtungsbestimmungseinrichtung (101) zum Bestimmen einer Bewegungsrichtung des tragbaren Navigationsgerätes;
einer Kartografieeinrichtung (103) zum Verknüpfen der Bewegungsrichtung mit kartografischer Information, wobei die Kartografieeinrichtung (103) ferner ausgebildet ist, ein bevorstehendes Hindernis in der Bewegungsrichtung zu erkennen; und
einer Hinweiseinrichtung (105) zum Ausgeben eines Hinweissignals, falls die Kartografieeinrichtung (103) ein Hindernis in der Bewegungsrichtung erkannt hat.

2. Tragbares Navigationsgerät gemäß Anspruch 1, wobei die Hinweiseinrichtung (105) ausgebildet ist, als Hinweissignal ein akustisches Warnsignal oder ein Vibrationswarnsignal auszugeben.

3. Tragbares Navigationsgerät gemäß Anspruch 1 oder 2, wobei die Kartografieeinrichtung (103) ausgebildet ist, die Bewegungsrichtung und eine Positionsinformation über eine Position des tragbaren Navigationsgerätes mit der kartografischen Information zu verknüpfen.

4. Tragbares Navigationsgerät gemäß einem der Ansprüche 1 bis 3, wobei die Richtungsbestimmungseinrichtung (101) ausgebildet ist, eine anfängliche Position des tragbaren Navigationsgerätes und/oder eine Straßenseiteninformation einzugeben.

5. Tragbares Navigationsgerät gemäß einem der Ansprüche 1 bis 4, wobei die Richtungsbestimmungseinrichtung (101) einen Kompass und/oder einen Beschleunigungssensor und/oder einen Drehratensensor umfasst, um die Bewegungsrichtung zu bestimmen.

6. Tragbares Navigationsgerät gemäß einem der Ansprüche 1 bis 5, wobei die Richtungsbestimmungseinrichtung (101) ausgebildet ist, die Bewegungsrichtung und/oder eine Position des tragbaren Navigationsgerätes durch den Empfang und die Verarbeitung von zumindest einem Satellitenpositionierungssignal zu bestimmen.

7. Tragbares Navigationsgerät gemäß einem der Ansprüche 1 bis 6, wobei die Kartografieeinrichtung (103) ausgebildet ist, als Hindernis eine Querstrasse, eine Mauer, ein feststehendes Objekt, eine Gehwegunterbrechung zu erkennen.

8. Tragbares Navigationsgerät gemäß einem der Ansprüche 1 bis 7, wobei die Kartografieeinrichtung (103) ausgebildet ist, das Hindernis als solches zu erkennen, falls ein Abstand zwischen dem tragbaren Navigationsgerät und dem Hindernis kleiner als ein vorbestimmter Entfernungsschwellwert ist.

9. Tragbares Navigationsgerät gemäß einem der Ansprüche 1 bis 8, wobei die Kartografieeinrichtung (103) ferner ausgebildet ist, eine alternative Bewegungsroute zur Umgehung des Hindernisses zu bestimmen und diese über die Hinweiseinrichtung mitzuteilen.

10. Navigationsverfahren unter Verwendung eines tragbaren Navigationsgerätes, mit den folgenden Schritten:
- Bereitstellen kartografischer Information;
- Bestimmen einer Bewegungsrichtung des tragbaren Navigationsgerätes; Verknüpfen der Bewegungsrichtung mit der kartografischen Information;
- bei Vorliegen eines bevorstehenden Hindernisses in der Bewegungsrichtung, Erkennen des Hindernisses; und
- Ausgeben eines Hinweissignals, falls ein Hindernis erkannt wurde.

11. Computerprogramm zum Ausführen des Navigationsverfahrens gemäß Anspruch 10, wenn das Computerprogramm auf einem Rechner ausgeführt wird.

12. Programmtechnisch eingerichtete Vorrichtung, die ausgebildet ist, das Computerprogramm gemäß Anspruch 11 zum Ausführen des Navigationsverfahrens gemäß Anspruch 10 auszuführen.
